# EUROPÄISCHE PATENTSCHRIFT

(11) **EP 3 935 287 B1**
(45) Veröffentlichungstag und Bekanntmachung des Hinweises auf die Patenterteilung: **05.04.2023**
(21) Anmeldenummer: 20704386.0
(22) Anmeldetag: 27.01.2020
(51) Int. Cl.: F16C 33/50, F16C 33/51, F16C 33/38

(54) **KÄFIGSEGMENT EINES WÄLZLAGERS**
CAGE SEGMENT OF A ROLLING BEARING
SEGMENT DE CAGE D'UN PALIER À ROULEMENT

(30) Priorität: 04.03.2019 DE 102019105473
(43) Veröffentlichungstag der Anmeldung: 12.01.2022
(73) Patentinhaber: Schaeffler Technologies AG & Co. KG, 91074 Herzogenaurach (DE)
(72) Erfinder: AMOKWE, Philip, 97464 Niederwerrn (DE); BOERSCH, Oliver, 97520 Röthlein (DE); GÜNTHER, Harry, 97422 Schweinfurt (DE); BREITHACK, Sascha, Shanghai, 201612 (CN); SCHORR, Gerhard, 96148 Baunach (DE)
(86) Internationale Anmeldenummer: PCT/DE2020/100047
(87) Internationale Veröffentlichungsnummer: WO 2020/177802

(56) Entgegenhaltungen:
- DE-A1-102015 200 381
- DE-A1-102015 219 277
- DE-A1-102016 206 072
- DE-A1-102017 211 488
- JP-A- 2007 285 507
- JP-A- 2013 174 254

## Beschreibung

Die Erfindung betrifft ein für die Verwendung in einem Wälzlager vorgesehenes Käfigsegment nach dem Oberbegriff des Anspruchs 1. Ferner betrifft die Erfindung ein Wälzlager, insbesondere Rollenlager, welches eine Mehrzahl solcher Käfigsegmente umfasst.

Die DE 10 2016 206072 offenbart einen Wälzlagerkäfig, welcher aus einer Mehrzahl von

Segmenten gebildet wird, wobei ein solches Segment die Merkmale des Oberbegriffs des Anspruchs 1 offenbart. Durch das Vorsehen von druck-elastischen Strukturen an den freien Enden seiner Seitenplatten der Segmente wird ein Wälzlagerkäfig geschaffen, der trotz der Verwendung von Segmenten eine stabile Ringform ausbildet, wodurch in einfacher Weise ein verschleißfreier Lauf auch bei segmentierten Wälzlagerkäfigen möglich wird.

Ein gattungsgemäßes Käfigsegment ist beispielsweise aus der DE 10 2015 219 277 A1 bekannt. Das bekannte Käfigsegment weist zwei Seitenplatten und zwei Stege auf, die fest miteinander verbunden sind, wobei die Stege sich parallel zu den Drehachsen der Wälzkörper des Wälzlagers erstrecken. Durch die Seitenplatten und die Stege ist eine Tasche zur Aufnahme eines Wälzkörpers gebildet. Die beiden Seitenplatten erstrecken sich beiderseits der Tasche in Umfangsrichtung des Wälzlagers soweit, dass zusätzlich halbe Taschen zur Aufnahme eines benachbarten Wälzkörpers gebildet sind.

Ein weiteres Käfigsegment grundsätzlich gleicher Bauform ist in der DE 10 2016 210 319 A1 beschrieben. In diesem Fall ist die Verwendung von Kegelrollen als Wälzkörper vorgesehen. Dementsprechend sind die Taschen des Käfigsegments trapezförmig gestaltet.

Aus der DE 10 2015 206 533 A1 ist ein Käfigsegment bekannt, durch welches genau eine Tasche für einen Wälzkörper gebildet ist. Das Käfigsegment ist aus mehreren Einzelteilen zusammengesetzt.

Ein aus mehreren Einzelteilen zusammengesetztes Käfigsegment ist auch in der DE 10 2015 200 381 A1 beschrieben. Das Käfigsegment ist zwischen zwei Wälzkörper einzusetzen. Eine Tasche ist durch das Käfigsegment nicht gebildet.

Einzelne Segmente eines Segmentkäfigs sind innerhalb eines Wälzlagers typischerweise mit Spiel in Umfangsrichtung angeordnet. Bei einem in der WO 2010/072197 A1 beschriebenen segmentierten Wälzlagerkäfig sind einzelne Käfigsegmente durch Spalte voneinander getrennt, wobei eine Obergrenze für die Summe aller Spaltbreiten angegeben ist. Diese Summe aller Spaltbreiten entspricht dem Kopfendspiel der Käfigsegmente, das heißt dem Spiel zwischen dem letzten und dem ersten Käfigsegment, wenn alle Käfigsegmente zusammengeschoben sind.

Ein in der DE 10 2015 205 256 A1 beschriebener segmentierter Wälzlagerkäfig umfasst mehrere Käfigsegmente, welche nicht einheitlich dimensioniert sind. Hierbei sind verschiedene Käfigsegmente derart in das Wälzlager eingesetzt, dass sich ein umfangsbezogenes Sicherheitsendspiel ergibt.

Des Weiteren werden noch die Schriften DE 10 2009 016 017 B4, DE 10 2012 223 316 B3, DE 10 2011 087 864A1, DE 10 2013 207 301 A1, DE 10 2013 220 833 A1, DE 10 2009 037 422 A1 als einschlägiger Stand der Technik angeführt.

Der Erfindung liegt die Aufgabe zugrunde, ein Käfigsegment und ein Wälzlager anzugeben, welches sich bei simplem Grundaufbau durch eine hohe Betriebssicherheit in einem besonders breiten Spektrum unterschiedlichster Betriebsbedingungen auszeichnet.

Diese Aufgabe wird erfindungsgemäß gelöst durch ein Käfigsegment mit den Merkmalen des Anspruchs 1. Das Käfigsegment ist zur Verwendung in einem Wälzlager gemäß Anspruch 9 geeignet.

Das Käfigsegment umfasst in an sich bekannter Grundkonzeption zwei Seitenplatten und mindestens zwei die Seitenplatten verbindende Stege, wobei zwischen jeweils zwei Stegen eine vollständige Wälzkörpertasche und durch Bereiche der Seitenplatten, welche über die Stege in Umfangsrichtung des Käfigsegments hinausragen, jeweils eine unvollständige Wälzkörpertasche gebildet ist. Erfindungsgemäß sind die beiden Stirnflächen jeder Seitenplatte unterschiedlich konturiert.

Dabei wird unter einer vollständigen Wälzkörpertasche eine solche verstanden, wo die Seitenplatten und zwei Stege eines Käfigsegments einen in sie eingelegten Wälzkörper umschließen. Eine unvollständige Wälzkörpertasche ist eine solche, wo ein in sie eingelegter Wälzkörper dreiseitig, also von einem Steg und zwei Seitenplatten eines Käfigsegments eingefasst ist.

Nur der Vollständigkeit halber sei darauf hingewiesen, dass eine unvollständige Wälzkörpertasche in der Regel eine halbe Wälzkörpertasche ist. Denkbar sind aber auch andere Kombinationen, sofern die unvollständigen Wälzkörpertaschen von zwei unterschiedlichen Käfigsegmenten nach der Montage der Käfigsegmente wieder eine vollständige Wälzkörpertasche ergeben.

Unter der unterschiedlichen Konturierung der beiden, einander in Umfangsrichtung des Wälzlagers gegenüberliegenden Stirnflächen jeder Seitenplatte ist auch zu verstehen, dass keine Symmetrie zwischen der ersten und der zweiten Stirnfläche einer Seitenplatte existiert. Es hat sich gezeigt, dass sich mit einer asymmetrischen Gestaltung der Seitenplatten im Vergleich zum Stand der Technik verbesserte Möglichkeiten ergeben, die im Betrieb des Wälzlagers auf die Käfigsegmente wirkenden Kräfte aufzunehmen.

Die beiden Seitenplatten des Käfigsegments weisen von den Stirnflächen beabstandete, seitliche Flächenabschnitte auf, welche von den umgebenden Oberflächenabschnitten der Seitenplatten derart abgesetzt sind, dass die in Axialrichtung des Wälzlagers zu messende Maximalbreite des Käfigsegments ausschließlich durch den Abstand zwischen den seitlichen, abgesetzten Flächenabschnitten der beiden Seitenplatten gegeben ist.

Damit ist eine besonders stabile Anbindung der Stege an die Seitenplatten gegeben. Sofern die seitlichen, hervorgehobenen Flächenabschnitte des Käfigsegments an anderen Komponenten, insbesondere Lagerringen, anlaufen, ist aufgrund der im Vergleich zu einer ebenen Seitenplatte verringerten Anlauffläche zudem ein schmierungstechnisch optimiertes Verhalten gegeben. Die seitlichen Flächenabschnitte, das heißt herausgehobene Abschnitte, welche die Maximalbreite des Käfigsegments bestimmen, befinden sich in gerader Verlängerung der beiden Stege, wobei die Stege orthogonal zu den genannten Flächenabschnitten ausgerichtet sind. Dies bedeutet, dass durch die Stege gelegte, in deren Längsrichtung verlaufende Geraden jeweils auch zwei der abgesetzten Flächenabschnitte der Seitenplatten schneiden.

In bevorzugter Ausgestaltung ist eine der Stirnflächen einer Seitenplatte als ebene Fläche ausgebildet, wogegen die andere Stirnfläche derselben Seitenplatte konvex gekrümmt ist. Der Krümmungsradius der konvex gekrümmten Stirnfläche, welche genauso wie die ebene Stirnfläche eine Stoßfläche darstellt, ist abgestimmt auf die Anzahl der Wälzkörper, auf geometrische Merkmale der Wälzkörper, beispielsweise den Teilkreis der kleineren Rollenstirn im Fall von Kegelrollen, sowie auf die Dimensionierung der Käfigsegmente selbst. Hierbei spielt insbesondere die Steghöhe des Käfigsegments sowie die an der Seitenplatte zu messende Seitenrandhöhe eine Rolle.

Gemäß einer möglichen Ausgestaltung ist der Krümmungsradius der konvex gekrümmten Stirnfläche kleiner als der Abstand zwischen den beiden Stirnflächen, das heißt die Länge des Käfigsegments. Bevorzugt kann das Verhältnis von Krümmungsradius (R) zu Abstand (LK) zwischen 30 und 50 % liegen. Das Käfigsegment ist hierbei mit Blickrichtung parallel zur Mittelachse des Wälzlagers zu betrachten. Auch in dazu orthogonaler Richtung ist in bevorzugter Ausgestaltung eine Krümmung der Stirnfläche gegeben. Damit stellt die konvex gekrümmte Stirnfläche eine räumlich gekrümmte Fläche dar, welche sich nicht in eine ebene Fläche ausbreiten lässt. Insbesondere kann es sich bei der gekrümmten Stirnfläche um eine sphärisch gekrümmte Fläche, das heißt eine Fläche, die einen Oberflächenabschnitt einer Kugel beschreibt, handeln. In verschiedenen Gestaltungen der konvex gekrümmten Fläche ist es möglich, auch bei einem maximalen Verkippen des Käfigsegments in alle Richtungen stets einen Punktkontakt mit Unterstützung der Druckellipse zwischen den aneinanderstoßenden Käfigsegmenten zu gewährleisten. Kantenspannungen werden damit vermieden.

Was den Einbau der Käfigsegmente in ein Wälzlager betrifft, ist gemäß Anspruch 7 ein grundlegender Unterschied gegenüber dem Stand der Technik durch ein negatives Kopfendspiel gegeben. Das Kopfendspiel ist folgendermaßen definiert:

Es wird davon ausgegangen, dass während der Montage n-1 gleichdimensionierte Käfigsegmente aneinanderstoßend auf den Innenring des Wälzlagers aufgelegt werden. Soll nun ein letztes, der Dimensionierung der übrigen Käfigsegmente entsprechendes Käfigsegment in die sich ergebende Lücke, zwischen angeordneten n-1 Käfigsegmente kraftlos eingesetzt werden, ist es üblich, alle Käfigsegmente so zu dimensionieren, dass die Lücke, die sich nach der Anordnung von n-1 Käfigsegmenten ergibt, etwas größer als die Abmessung des letzten Käfigsegments ist. Ist dann das letzte Käfigsegment auf den Wälzlagerinnenring aufgelegt, so ergibt sich zwangsläufig durch die größere Lücke ein Kopfendspiel zwischen einer Stirnfläche des letzten Käfigsegments und einer Stirnfläche des ersten Käfigsegments. Folglich ist ein negatives Kopfendspiel gleichbedeutend damit, dass das letzte Käfigsegment nicht mehr in der beschriebenen Weise in das Wälzlager eingesetzt werden kann. Um dennoch sämtliche Käfigsegmente in das Wälzlager einzusetzen, müssen die Käfigsegmente zumindest geringfügig vom Wälzlagerinnenring abgehoben werden, so dass nach der Montage des letzten Käfigsegments der so gebildete Käfig einen geringen radialen Abstand zum jeweiligen Lagerring einhält, also in einer theoretischen Betrachtung der montierte Käfig schwebend oberhalb des Wälzlagerinnenrings angeordnet ist. Diese schwebende Anordnung der Käfigsegmente führt dazu, dass sich während des Betriebs des Lagers kein oder nur ein sehr geringes Betriebsspiel zwischen den Käfigsegmenten einstellt, wie die nachfolgende Betrachtung zeigt:

Dazu wird zunächst der aus Käfigsegmenten gebildete Käfig als geschlossener Ring betrachtet, bei welchem alle Käfigsegmente untereinander entsprechend einem nicht segmentierten Käfig verbunden sind. Wird ein solcher Käfigring in einem Radiallager verbaut, verliert dieser geschlossene Käfigring aufgrund der wirkenden Schwerkraft seine zentrische Lage zur Lagerdrehachse, indem sich innerhalb der Grenzen des Taschenspiels auch ohne Belastung des Lagers die 12 Uhr Position des Käfigrings dem Wälzlagerinnenring nähert, während sich die 6 Uhr Position des Käfigrings vom Wälzlagerinnenring etwas entfernt. Sind die Käfigsegmente allerdings untereinander unverbunden, kommt es neben der Verlagerung in 6 bzw. 12 Uhr-Richtung auch noch zu einer leichten Ovalisierung, indem sich die Käfigsegmente durch die wirkende Schwerkraft etwas auseinandergezogen werden. Sind die Käfigsegmente nicht wie bei der Erfindung durch das negative Kopfendspiel nach der Montage schwebend angeordnet, sondern liegen die Käfigsegmente nach der Montage bereits am Wälzlagerinnenring an, ist eine Näherung der Käfigsegmente an den Wälzlagerinnenring in der 12 Uhr-Position ausgeschlossen. Dies hat zur Folge, dass das Betriebsspiel allein durch die Verlagerung der Käfigsegmente in der 6 Uhr-Position bestimmt ist. Wird aber durch die schwebende Anordnung der Käfigsegmente gleichzeitig auch eine Verlagerungsmöglichkeit in der 12 Uhr-Position geschaffen, wird durch diese Verlagerung das Betriebsspiel beseitigt oder zumindest minimiert.

Gemäß einer Ausgestaltung, die besonders für die Verwendung in Kegelrollenlagern geeignet ist, ragt aus jedem Steg mindestens eine Führungsnase zur Führung eines in der Wälzkörpertasche befindlichen Wälzkörpers heraus. Diese Führungsnasen stellen sicher, dass der Käfig oder die ihn bildenden Käfigsegmente zwischen etwa 3 und 9 Uhr von den Wälzkörpern geführt werden, aber im Vergleich zu einer reinen, durchgängigen Bord- oder Laufringführung durch ihren geringen flächenmäßigen Kontakt zu den Wälzkörpern wesentlich geringere Reibungsverluste hervorrufen.

Weisen die Seitenplatten hochstehende Noppen auf, deren Erstreckungsrichtung der Erstreckungsrichtung der Führungsnasen entgegengerichtet ist, so ergeben sich Vorteile bei der Fertigung. Die Noppen dienen dabei als definierte Auflagepunkte für anschließende Bearbeitungsschritte, für welche die genaue Lage des Segments im Raum bekannt sein muss.

Halten die in die vollständigen und unvollständigen Wälzkörpertaschen eingesetzten Wälzkörper ein Spiel S1 bzw. S2 in Richtung der Drehachse der Wälzkörper zu inneren Flächen einer der Seitenplatten ein und ist das Spiel S1 der Wälzkörper in den unvollständigen Taschen größer als das Spiel S2 der Wälzkörper in der vollständigen Tasche, können schränkende Wälzkörper, die in unvollständigen Taschen angeordnet sind, keine Belastungen auf die Seitenplatten ausüben. Ebenso können Seitenplatten von schränkenden Käfigsegmenten nicht mit den Wälzkörpern, die in unvollständigen Taschen angeordnet sind, in Kontakt treten.

Unabhängig davon, für welche Art von rollenförmigen Wälzkörpern das Käfigsegment ausgelegt ist, sind die der vollständigen Wälzkörpertasche beziehungsweise den unvollständigen Wälzkörpertaschen zugewandten Innenflächen der Seitenplatten vorzugsweise als - mit Ausnahme von Übergangsbereichen zu den Stegen - glattwandige Flächen ausgebildet. Schließen an einer der Seitenplatten die glattwandigen Flächen, die von einem der Stege in Richtung der in Umfangsrichtung benachbarten Stege ausgehen, zusammen mit den glattwandigen Flächen, die von den benachbarten Stegen auf diesen Steg zulaufen, einen Winkel β ein, der kleiner 180° ist, sind die Mitten zwischen zwei benachbarten Stegen gegenüber den stegnahen Rändern der aufeinander zulaufenden Flächen etwas vertieft. Durch diese Ausbildung treten lediglich die den Stegen nahen Bereiche der glattwandigen Flächen mit den Rollenstirnflächen in körperlichen Kontakt, was die Reibung zwischen Rollenstirnflächen an den glattwandigen Flächen etwas reduziert.

Das Käfigsegment ist vorzugsweise aus Metall gefertigt. Hierbei können beliebige bekannte Verfahren, insbesondere spanabhebende und umformende Verfahren, zum Beispiel Gießen, zum Einsatz kommen.

Ein Wälzlager, welches einen durch die Käfigsegmente gebildeten, segmentierten Käfig aufweist, kann als Kegelrollenlager, Zylinderrollenlager oder Pendelrollenlager ausgebildet sein. Im Fall eines mehrreihigen Lagers können mehrere Reihen an Käfigsegmenten vorgesehen sein. Als Einsatzgebiet der Käfigsegmente sind insbesondere Großlager, beispielsweise in Windkraftanlagen, zu nennen.

Nachfolgend wird ein Ausführungsbeispiel der Erfindung anhand einer Zeichnung näher erläutert. Hierin zeigen:
- Fig. 1: ein Käfigsegment für ein Wälzlager in perspektivischer Ansicht,
- Fig. 2 bis 4: das Käfigsegment in weiteren Ansichten,
- Fig. 5: eine Anordnung aus dem Käfigsegment, einem Wälzkörper und einem Lagerring,
- Fig. 6: eine Anordnung aus zwei Käfigsegmenten, drei Wälzkörpern und einem Lagerring,
- Fig. 7: die Anordnung nach Figur 6 in einer weiteren Ansicht,
- Fig. 8: ein Käfigsegment gemäß Fig. 4 mit aufgenommenen Wälzkörpern.

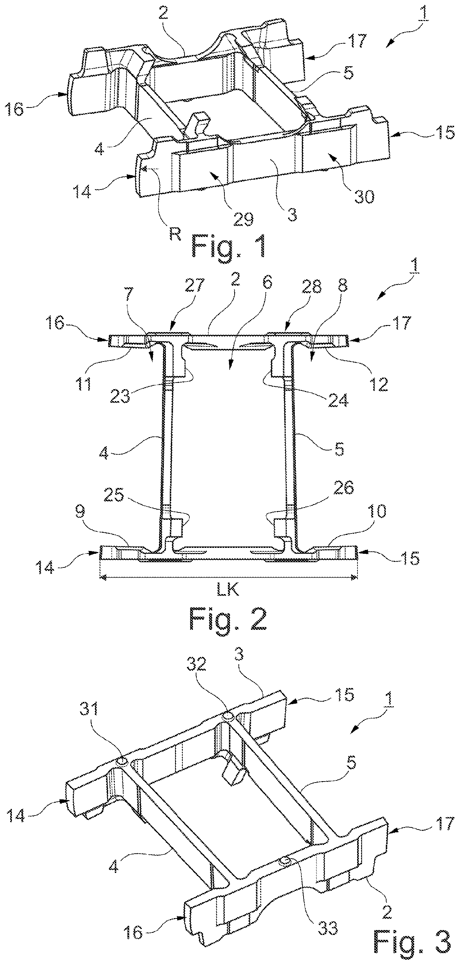

Ein insgesamt mit dem Bezugszeichen 1 gekennzeichnetes Käfigsegment ist für die Verwendung in einem Wälzlager 20, nämlich Kegelrollenlager, vorgesehen. Bei dem Käfigsegment 1 handelt es sich um ein einstückiges Metallteil, welches zwei Seitenplatten 2, 3 und zwei die Seitenplatten 2, 3 verbindende Stege 4, 5 aufweist. Das Käfigsegment 1 ist aus Stahl gefertigt. Zwischen den Seitenplatten 2, 3 und den Stegen 4, 5 ist eine Tasche 6, das heißt vollständige Wälzkörpertasche, für eine Kegelrolle als Wälzkörper 13 gebildet, wobei die Seitenplatten 2, 3 und die Stege 4, 5 dieses Käfigsegments 1 eine in sie eingesetzte Kegelrolle (in Fig. 1 - 4 nicht gezeigt) vollständig umranden. Zusätzlich sind durch das Käfigsegment 1 zwei unvollständige Wälzkörpertaschen 7, 8 gebildet, welche in Umfangsrichtung neben der Tasche 6 angeordnet sind. Jede unvollständige Wälzkörpertasche 7, 8 wird durch einen Steg 4, 5 und einen Schenkel 9, 10, 11, 12 einer Seitenplatte 2, 3 begrenzt. Der Schenkel 9 liegt beabstandet durch den Steg 4 dem Schenkel 11 gegenüber. Ebenso verhält es sich beim Schenkel 10, der allerdings beabstandet durch den Steg 5 dem Schenkel 10 gegenüberliegt.

Nur der Vollständigkeit halber sei darauf hingewiesen, dass nach der Erfindung ein Käfigsegment 1 auch mehr als eine vollständige Wälzkörpertasche 6 aufweisen kann, die die in sie eingesetzten Wälzkörper 13 vollständig umranden.

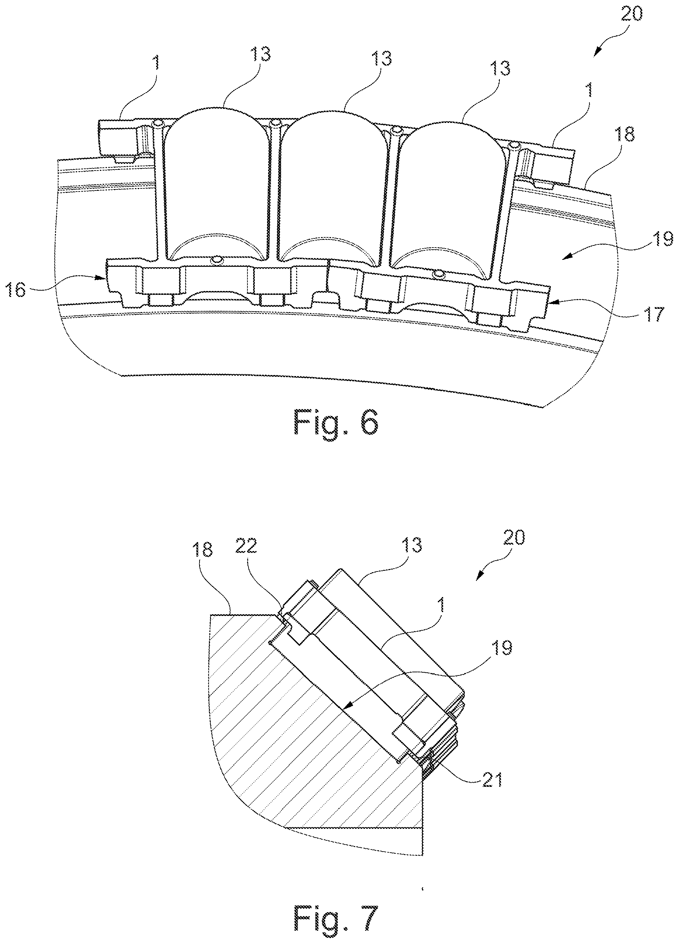

In Umfangsrichtung des Wälzlagers 20 ist jede Seitenplatte 2, 3 durch Stirnflächen 14, 15, 16, 17 begrenzt. Hierbei ist die Stirnfläche 14 durch den Schenkel 9 und die Stirnfläche 15 durch den Schenkel 10 gebildet. In entsprechender Weise sind die Stirnflächen 16, 17 durch die Schenkel 11, 12 der Seitenplatte 2 gebildet. Beim Betrieb des Wälzlagers 20 stellen die Stirnflächen 14, 15, 16, 17 Kontaktflächen dar, an welchen die Käfigsegmente 1 miteinander in Kontakt treten, wie aus Figur 6 hervorgeht. Der in Umfangsrichtung des Wälzlagers 20 zwischen den Stirnflächen 14, 15 des Käfigsegments 1 zu messende Abstand stellt die Länge LK des Käfigsegments 1 dar.

Bei den Stirnflächen 14, 16 handelt es sich um konvex gekrümmte Flächen, deren Krümmungsradius mit R bezeichnet ist. Die Stirnflächen 15, 17 sind dagegen ebene Flächen. Sind die Käfigsegmente 1 durch Aneinanderreihung in Umfangsrichtung zu einem Käfig vervollständigt, stehen die konvex gekrümmten Stirnflächen 14, 16 eines ersten Käfigsegments 1 mit den ebenen Stirnflächen 15, 17 eines zweiten, unmittelbar in Umfangsrichtung anschließenden Käfigsegments 1 in Kontakt, während die ebenen Stegflächen 15, 17 des ersten Käfigsegments 1 mit den konvex gekrümmten Stirnflächen 14, 16 eines dritten, dem zweiten Käfigsegment 1 in Umfangsrichtung gegenüberliegenden Käfigsegments 1 in Kontakt stehen. Dieser Kontakt von ebenen und konvex gekrümmten Flächen bewirkt, dass unabhängig von der Verkippung zwischen zwei benachbarten Käfigsegmenten 1 in Betrieb stets vergleichbare Kontaktflächen durch die Stirnflächen 14, 15, 16, 17 gebildet sind.

Die Wälzkörper 13, im vorliegenden Fall Kegelrollen, welche in den vollständigen Wälzkörpertaschen 6 und unvollständigen Wälzkörpertaschen 7, 8 liegen, rollen auf einem Innenring 18 ab, dessen Laufbahn mit 19 bezeichnet ist. Der Innenring 18 weist zwei der Laufbahn 19 benachbarte, unterschiedlich hohe Borde 21, 22 auf. Der Innenring 18 und die Käfigsegmente 1 sind derart dimensioniert, dass nicht sämtliche Käfigsegmente 1 gleichzeitig komplett auf dem Innenring 18 aufliegen können. Dies ist gleichbedeutend damit, dass das Kopfendspiel, welches sich theoretisch beim Einsetzen des letzten Käfigsegmentes 1 ergibt, negativ ist. Innerhalb des fertig montierten Wälzlagers 20 ist somit zumindest ein Teil der Käfigsegmente 1 vom Innenring 18 abgehoben, was als schwebende Anordnung der Käfigsegmente 1 bezeichnet wird.

An derjenigen Seite des Käfigsegments 1, welche dem Innenring 18 zugewandt ist, sind an den Stegen 4, 5 Führungsnasen 23, 24, 25, 26 ausgebildet, welche einen in eine geschlossene Tasche 6 eingesetzten Wälzkörper 13 kontaktieren. Dabei ragen in diesem Ausführungsbeispiel jeweils zwei Führungsnasen 23, 25 bzw. 24, 26 nahe den Seitenplatten 2, 3 aus den jeweiligen Stegen 4, 5 heraus. Nur der Vollständigkeit halber sei darauf hingewiesen, dass in einem anderen Ausführungsbeispiel die beiden jeweils mittels eines Stegs 4; 5 vorgesehenen Führungsnasen 23, 25; 24, 26 auch von einer gemeinsamen Führungsnase (nicht gezeigt) gebildet sein können, die sich dann als bloß eine Führungsnase zwischen den Seitenplatten 2, 3 erstreckt.

Die Seitenplatten 2, 3 weisen, jeweils in gerader Verlängerung der Stege 4, 5, insgesamt vier abgesetzte Flächenabschnitte 27, 28, 29, 30 auf. Jeder Flächenabschnitt 27, 28, 29, 30 hat eine rechteckige Grundform, wobei die Flächenabschnitte 27, 28 durch die Seitenplatte 2 gebildet und gegenüber angrenzenden Oberflächenbereichen der Seitenplatte 2 herausgehoben sind. In entsprechender Weise sind die Flächenabschnitte 29, 30 aus der übrigen Seitenplatte 3 herausgehoben. Soweit die Seitenplatten 2, 3 im eingebauten Zustand des Käfigsegments 1 weitere Bauteile kontaktieren, existiert der entsprechende Kontakt lediglich an den herausgehobenen Flächenabschnitten 27, 28, 29, 30, nicht jedoch an sonstigen seitlichen Oberflächenabschnitten der Seitenplatten 2, 3.

Auf der dem nicht dargestellten Außenring des Wälzlagers 2 zugewandten, das heißt den Führungsnasen 23, 24, 25, 26 abgewandten Seite des Käfigsegments 1 weisen die Seitenplatten 2, 3 insgesamt drei Noppen 31, 32, 33 auf, welche die Positionierung der Käfigsegmente 1 während der Montage erleichtern. Hierbei befinden sich zwei Noppen 31, 32 an den Übergängen zwischen der Seitenplatte 3 und den Stegen 4, 5. Eine weitere Noppe 33 befindet sich auf der Seitenplatte 2 mittig zwischen den Stegen 4, 5.

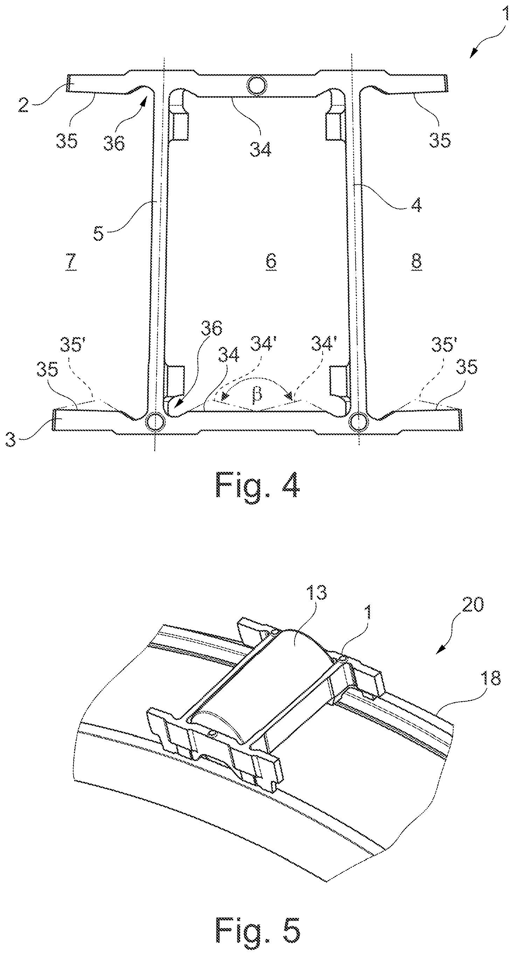

Die Wälzkörper 13 kontaktieren, wie aus den Figuren 5 bis 7 hervorgeht, mit ihren Stirnseiten die Seitenplatten 2, 3. Innerhalb der Tasche 6 laufen die Wälzkörper 13 hierbei an ebenen Flächen 34 an, welche sich über den größten Teil des Abstandes zwischen den Stegen 4, 5 erstrecken. An den über die vollständige Wälzkörpertasche 6 hinausragenden, die unvollständige Wälzkörpertaschen 7, 8 bildenden Schenkeln 9, 10, 11, 12 der Seitenplatten 2, 3 sind in analoger Weise Flächen 35 gebildet, welche sich jeweils über den größten Teil der Länge des betreffenden Schenkels 9, 10, 11, 12 erstrecken. In den Übergangsbereichen zwischen den Stegen 4, 5 und den Flächen 34, 35 sind abgerundete Ausnehmungen 36 ausgeformt, welche nicht gewünschte Kontakte zwischen den Wälzkörpern 13 und der Tasche 6 beziehungsweise den Halbtaschen 7, 8 verhindern und zudem Spannungsspitzen in den Übergangsbereichen zwischen den Stegen 4, 5 und den Seitenplatten 2, 3 herabsetzen.

Wie in Fig. 4 durch die Strichelung angedeutet, ist nicht erforderlich, dass die glattwandigen Flächen 34, 35 zwischen zwei benachbarten Stegen 4, 5 eines oder eines benachbarten Käfigsegments 1 vollkommen eben verlaufen. So können -wie für die Seitenplatte 3 gezeigt- die von den Stegen 4, 5 ausgehenden und auf die den Stegen 4, 5 unmittelbar benachbarten Stege 4; 5 zulaufenden Flächen 34`, 35` mit den Flächen 34', 35`, die von den benachbarten Stegen 4, 5 ausgehen und auf wieder diesen Steg 4, 5 zulaufenden, einen Winkel β einschließen, der in diesem Ausführungsbeispiel bei etwa 135° liegt. Auch wenn dieser Winkel β nur für die Flächen 34`, die von benachbarten Stegen 4, 5 eines Käfigsegments 1 ausgehen, gilt diese Winkelbeziehung natürlich auch, wenn zwei unvollständige Taschen 7, 8 von einander benachbarten Käfigsegmenten 1 eine gemeinsame Tasche bilden. Dadurch, dass durch den winkligen Verlauf der aufeinander zulaufenden Flächen 34' 35' eine V-förmige Innenkontur geschaffen wird, die einen Mittenkontakt zu den Stirnflächen von die Taschen 6, 7, 8 eingesetzten Wälzkörpern 13 (in Fig. 4 nicht gezeigt) ausschließt, sind Vorteile hinsichtlich der Führung und Reibung gegeben.

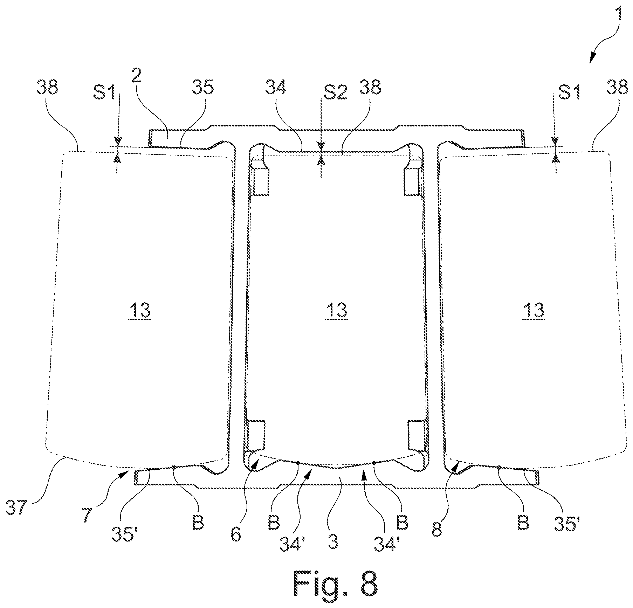

In Fig. 8 ist ein Käfigsegment 1 gemäß Fig. 4 gezeigt, dessen aufeinander zulaufende Flächen 34', 35' nicht nur angedeutet einen Winkel β einschließen und dessen Taschen 6, 7, 8 bereits mit Wälzkörpern 13 in der Form von Kegelrollen befüllt sind. Alle Kegelrollen haben die gleichen Abmessungen. Wie die Darstellung gemäß Fig. 8 zeigt, stehen die gerundet ausgebildeten Stirnflächen 37 der Wälzkörper 13 an den Berührpunkten B mit den Flächen 34', 35' in Kontakt. Deutlich ist der Darstellung gemäß Fig. 8 entnehmbar, dass die geraden Stirnflächen 38 der beiden Kegelrollen 13, welche in den unvollständigen Taschen 7, 8 angeordnet sind, ein Spiel S1 zu den Flächen 35 einhalten, welches größer als das Spiel S2 ist, welches die gerade Stirnfläche 38 der in der vollständige Tasche 6 angeordneten Kegelrolle zu der Fläche 34 einhält. Dieses vergrößerte Spiel S2, welches in diesem Ausführungsbeispiel durch einfache Reduktion der Dicke der Seitenplatten 3 im Bereich der unvollständigen Taschen 7, 8 geschaffen wurde, bewirkt, dass während des Betriebs schränkende Kegelrollen 13 in den beiden unvollständigen Taschen 7, 8 die Seitenplatten 2, 3 nicht belasten.

Aufgrund der bereits erwähnten, herausgehobenen Flächenabschnitte 27, 28, 29, 30 ist auch in den Übergangsbereichen zwischen den Stegen 4, 5 und den Seitenplatten 2, 3 eine ausreichende Materialstärke der Seitenplatten 2, 3 gegeben. Die abgesetzten Flächenabschnitte 27, 28, 29, 30 sorgen zudem dafür, dass beim Betrieb des Wälzlagers 20 die unterschiedlich gestalteten Stirnflächen 14, 15, 16, 17 lediglich aneinander, nicht jedoch an umgebende Komponenten, etwa einen Lagerring, anstoßen.

Durch die Kombination aus konvex gekrümmten Stirnflächen 14, 16 und ebenen Stirnflächen 15, 17 ist unabhängig von der exakten Winkellage der einzelnen Käfigsegmente 1 innerhalb des Wälzlagers 20 eine näherungsweise einheitliche Belastungssituation sämtlicher Käfigsegmente 1 gegeben. Verschleiß der Käfigsegmente 1 spielt beim Betrieb des Wälzlagers 20 praktisch keine Rolle.

### Bezugszeichenliste

- 1: Käfigsegment
- 2: Seitenplatte
- 3: Seitenplatte
- 4: Steg
- 5: Steg
- 6: Tasche
- 7: Halbtasche
- 8: Halbtasche
- 9: Schenkel der Halbtasche
- 10: Schenkel der Halbtasche
- 11: Schenkel der Halbtasche
- 12: Schenkel der Halbtasche
- 13: Wälzkörper
- 14: Stirnfläche, konvex
- 15: Stirnfläche, eben
- 16: Stirnfläche, konvex
- 17: Stirnfläche, eben
- 18: Innenring
- 19: Laufbahn
- 20: Wälzlager
- 21: Bord
- 22: Bord
- 23: Führungsnase
- 24: Führungsnase
- 25: Führungsnase
- 26: Führungsnase
- 27: abgesetzter Flächenabschnitt
- 28: abgesetzter Flächenabschnitt
- 29: abgesetzter Flächenabschnitt
- 30: abgesetzter Flächenabschnitt
- 31: Noppe
- 32: Noppe
- 33: Noppe
- 34: Fläche
- 35: Fläche
- 36: Ausnehmung
- 37: Stirnfläche, gewölbt
- 38: Stirnfläche, gerade

- β: Winkel
- LK: Länge des Käfigsegments
- R: Radius der konvexen Stirnfläche
- B: Berührpunkt
- S1, S2: Spiel

## Patentansprüche

1. Käfigsegment (1) für ein Wälzlager (2), mit zwei Seitenplatten (2, 3) und mindestens zwei die Seitenplatten (2, 3) verbindenden Stegen (4, 5), wobei zwischen jeweils zwei Stegen (4, 5) eine vollständige Wälzkörpertasche (6) und durch Bereiche der Seitenplatten (2, 3), welche über die Stege (4, 5) in Umgangsrichtung des Käfigsegments (1) hinausragen, jeweils eine unvollständige Wälzkörpertasche (7, 8) gebildet ist, **dadurch gekennzeichnet, dass** die beiden Stirnflächen (14, 15; 16, 17) jeder Seitenplatte (2, 3) unterschiedlich konturiert sind und die Seitenplatten (2, 3) von den Stirnflächen (14, 15; 16, 17) beabstandete, seitliche Flächenabschnitte (27, 28, 29, 30) aufweisen, welche von den umgebenden Oberflächenabschnitten der Seitenplatten (2, 3) derart abgesetzt sind, dass die Maximalbreite des Käfigsegments (1) ausschließlich durch den Abstand zwischen den seitlichen, abgesetzten Flächenabschnitten (27, 28, 29, 30) der beiden Seitenplatten (2, 3) gegeben ist und sich die seitlichen Flächenabschnitte (27, 28, 29, 30), welche die Maximalbreite des Käfigsegments (1) bestimmen, in axialer Verlängerung der jeweiligen Stege (4, 5) befinden.

2. Käfigsegment (1) nach Anspruch 1, **dadurch gekennzeichnet, dass** eine der Stirnflächen (15, 17) eine ebene Fläche darstellt und die andere Stirnfläche (14, 16) konvex gekrümmt ist.

3. Käfigsegment (1) nach Anspruch 2, **dadurch gekennzeichnet, dass** der Krümmungsradius (R) der konvex gekrümmten Stirnfläche (14, 16) kleiner als der Abstand (LK) zwischen den beiden Stirnflächen (14, 15; 16, 17) ein und derselben Seitenplatte (2, 3) ist, wobei bevorzugt das Verhältnis von Krümmungsradius (R) zu Abstand (LK) zwischen 30 und 50 % liegt.

4. Käfigsegment (1) nach einem der Ansprüche 1 bis 3, **dadurch gekennzeichnet, dass** aus jedem Steg (4, 5) mindestens eine Führungsnase (23, 24, 25, 26) zur Führung eines in der Wälzkörpertasche (6) befindlichen Wälzkörpers (13) herausragt.

5. Käfigsegment (1) nach einem der Ansprüche 1 bis 4, **dadurch gekennzeichnet, dass** die in die vollständigen und unvollständigen Wälzkörpertaschen (6, 7, 8) eingesetzten Wälzkörper (13) ein Spiel S1, S2 in Richtung der Drehachse der der Wälzkörper (13) zu inneren Flächen (34, 35; 34`, 35') einer der Seitenplatten (2, 3) einhalten, wobei das Spiel S1 der Wälzkörper (13) in den unvollständigen Taschen (7, 8) größer als das Spiel S2 der Wälzkörper (13) in der vollständigen Tasche (6) ist.

6. Käfigsegment (1) nach einem der Ansprüche 1 bis 5, **dadurch gekennzeichnet, dass** die der Wälzkörpertasche (6) beziehungsweise den unvollständigen Wälzkörpertaschen (7, 8) zugewandten Innenflächen der Seitenplatten (2, 3) als - mit Ausnahme von Übergangsbereichen zu den Stegen (5, 6) - glattwandige Flächen (34, 35, 34`, 35') ausgebildet sind, wobei an einer der Seitenplatten (3) die glattwandigen Flächen (34', 35'), die von einem der Stege (4) in Richtung der in Umfangsrichtung benachbarten Stege (5) ausgehen, zusammen mit den glattwandigen Flächen (34'; 35'), die von den benachbarten Stegen (5) auf diesen Steg (4) zulaufen, einen Winkel β einschließen, der kleiner 180° ist.

7. Wälzlager (20), umfassend einen Innenring (18) und einen Außenring als Lagerringe, zwischen den Lagerringen abrollende Wälzkörper (13), sowie eine Anzahl nach Anspruch 1 ausgebildeter, die Wälzkörper (13) auf Abstand zueinander haltende Käfigsegmente (1), welche derart dimensioniert sind, dass ein negatives Kopfendspiel zwischen den Käfigsegmenten (1) gegeben ist, wenn während der Montage alle Käfigsegmente (1) auf einen der Lagerringe (17; 18) aufgelegt sind.

8. Wälzlager (20) nach Anspruch 7, **dadurch gekennzeichnet, dass** als Wälzkörper (13) Kegelrollen vorgesehen sind.

## Claims

1. A cage segment (1) for a roller bearing (2), with two side plates (2, 3) and at least two bridges (4, 5) connecting the side plates (2, 3), wherein a complete rolling element pocket (6) is formed between two bridges (4, 5) each and an incomplete rolling element pocket (7, 8) is formed by regions of the side plates (2, 3) each, which project beyond the bridges (4, 5) in the circumferential direction of the cage segment (1), **characterised in that** the two end faces (14, 15; 16, 17) of each side plate (2, 3) are differently contoured and the side plates (2, 3) have lateral surface portions (27, 28, 29, 30) spaced from the end faces (14, 15; 16, 17) that are offset from the surrounding surface portions of the side plates (2, 3) in such a way that the maximum width of the cage segment (1) is given exclusively by the distance between the lateral, offset surface portions (27, 28, 29, 30) of the two side plates (2, 3) and the lateral surface portions (27, 28, 29, 30) that determine the maximum width of the cage segment (1) are located in axial extension of the respective bridges (4, 5).

2. The cage segment (1) according to claim 1, **characterised in that** one of the end faces (15, 17) is a flat surface and the other end face (14, 16) is convexly curved.

3. The cage segment (1) according to claim 2, **characterised in that** the radius of curvature (R) of the convexly curved end face (14, 16) is smaller than the distance (LK) between the two end faces (14, 15; 16, 17) of one and the same side plate (2, 3), wherein the ratio of the radius of curvature (R) to the distance (LK) is preferably between 30 and 50%.

4. The cage segment (1) according to any one of claims 1 to 3, **characterised in that** at least one guide nose (23, 24, 25, 26) for guiding a rolling element (13) located in the rolling element pocket (6) extends from each bridge (4, 5).

5. The cage segment (1) according to any one of claims 1 to 4, **characterised in that** the rolling elements (13) inserted into the complete and incomplete rolling element pockets (6, 7, 8) have play S1, S2 in the direction of the axis of rotation of the rolling elements (13) with respect to inner surfaces (34, 35; 34', 35') of one of the side plates (2, 3), wherein the play S1 of the rolling elements (13) in the incomplete pockets (7, 8) is greater than the play S2 of the rolling elements (13) is in the complete pocket (6).

6. The cage segment (1) according to any one of claims 1 to 5, **characterised in that** the inner surfaces of the side plates (2, 3) facing the rolling element pocket (6) or the incomplete rolling element pockets (7, 8) are designed - with the exception of transition regions to the bridges (5, 6) - as smooth-walled surfaces (34, 35, 34', 35'), wherein on one of the side plates (3) the smooth-walled surfaces (34', 35') that extend from one of the bridges (4) in the direction of the bridges (5) adjacent in the circumferential direction, together with the smooth-walled surfaces (34'; 35') which extend from the adjacent bridges (5) towards this bridge (4), enclose an angle β that is smaller than 180°.

7. A rolling bearing (20), comprising an inner ring (18) and an outer ring as bearing rings, rolling elements (13) rolling between the bearing arrangements, and a number of cage segments (1) formed according to claim 1 and keeping the rolling elements (13) at a distance from one another, which are dimensioned so that there is a negative head end play between the cage segments (1) when all cage segments (1) are placed on one of the bearing rings (17; 18) during assembly.

8. The rolling bearing (20) according to claim 7, **characterised in that** tapered rollers are provided as rolling elements (13).

## Revendications

1. Segment de cage (1) pour un palier à roulement (2), avec deux plaques latérales (2, 3) et au moins deux entretoises (4, 5) reliant les plaques latérales (2, 3), entre respectivement deux entretoises (4, 5), une poche pour corps roulant (6) complète étant formée et, par le biais de zones des plaques latérales (2, 3) qui dépassent des entretoises (4, 5) dans la direction circonférentielle du segment de cage (1), une poche pour corps roulant (7, 8) incomplète étant formée, **caractérisé en ce que** les deux faces frontales (14, 15 ; 16, 17) de chaque plaque latérale (2, 3) sont profilées différemment et les plaques latérales (2, 3) ont des sections de faces latérales (27, 28, 29, 30) qui sont espacées des faces frontales (14, 15 ; 16, 17), qui sont décalées des sections de faces supérieures environnantes des plaques latérales (2, 3) de telle sorte que la largeur maximale du segment de cage (1) est déterminée exclusivement par la distance entre les sections de faces latérales (27, 28, 29, 30) décalées des deux plaques latérales (2, 3) et les sections de faces latérales (27, 28, 29, 30), qui déterminent la largeur maximale du segment de cage (1), se trouvent dans le prolongement axial des entretoises respectives (4, 5).

2. Segment de cage (1) selon la revendication 1, **caractérisé en ce que** l'une des faces frontales (15, 17) représente une face plane et l'autre face frontale (14, 16) est incurvée de manière convexe.

3. Segment de cage (1) selon la revendication 2, **caractérisé en ce que** le rayon de courbure (R) de la face frontale à courbure convexe (14, 16) est inférieur à la distance (LK) entre les deux faces frontales (14, 15 ; 16, 17) d'une seule et même plaque latérale (2, 3), de préférence le rapport du rayon de courbure (R) à la distance (LK) étant compris entre 30 et 50 %.

4. Segment de cage (1) selon l'une quelconque des revendications 1 à 3, **caractérisé en ce qu'**au moins un ergot de guidage (23, 24, 25, 26) pour le guidage d'un corps roulant (13) situé dans la poche pour corps roulant (6) fait saillie depuis chaque entretoise (4, 5).

5. Segment de cage (1) selon l'une quelconque des revendications 1 à 4, **caractérisé en ce que** les corps roulants (13) insérés dans les poches pour corps roulants complète et incomplètes (6, 7, 8) présentent un jeu S1, S2 en direction de l'axe de rotation des corps roulants (13) aux faces internes (34, 35 ; 34', 35') d'une des plaques latérales (2, 3), le jeu S1 des corps roulants (13) dans les poches incomplètes (7, 8) étant supérieur au jeu S2 des corps roulants (13) dans la poche (6) complète.

6. Segment de cage (1) selon l'une quelconque des revendications 1 à 5, **caractérisé en ce que** les faces internes des plaques latérales (2, 3) tournées vers la poche pour corps roulants (6) ou les poches pour corps roulants incomplètes (7, 8) sont conçues comme des faces à paroi lisse (34, 35, 34', 35') - à l'exception des zones de transition vers les entretoises (5, 6), au niveau d'une des plaques latérales (3), les faces à paroi lisse (34', 35'), qui s'étendent depuis une des entretoises (4) en direction de l'entretoise (5) voisine dans la direction circonférentielle, formant un angle β inférieur à 180° avec les surfaces à paroi lisse (34' ; 35') qui s'étendent depuis les entretoises (5) adjacentes vers cette entretoise (4).

7. Palier à roulement (20), comprenant une bague interne (18) et une bague externe comme bagues de palier, des corps roulants (13) roulant entre les roulements et un certain nombre de segments de cage (1) conçus selon la revendication 1, qui maintiennent les corps roulants (13) à distance l'un de l'autre, qui sont dimensionnés de telle sorte qu'il existe un jeu de tête négatif entre les segments de cage (1) lorsque tous les segments de cage (1) sont placés sur l'une des bagues de palier (17 ; 18) lors du montage.

8. Palier à roulement (20) selon la revendication 7, **caractérisé en ce que** des rouleaux coniques sont prévus comme corps roulants (13).
